**Europäisches Patentamt**

**European Patent Office**

**Office européen des brevets**

(19)

(11) **EP 1 701 135 A1**

(12) **EUROPÄISCHE PATENTANMELDUNG**

(43) Veröffentlichungstag:
 **13.09.2006 Patentblatt 2006/37**

(51) Int Cl.:
 **G01C 25/00** (2006.01)   **G01P 21/00** (2006.01)

(21) Anmeldenummer: **05005371.9**

(22) Anmeldetag: **11.03.2005**

(84) Benannte Vertragsstaaten:
 **AT BE BG CH CY CZ DE DK EE ES FI FR GB GR HU IE IS IT LI LT LU MC NL PL PT RO SE SI SK TR**
 Benannte Erstreckungsstaaten:
 **AL BA HR LV MK YU**

(71) Anmelder: **Delphi Technologies, Inc.**
 **Troy, MI 48007 (US)**

(72) Erfinder: **Freese, Wolfgang J.F.**
 **51789 Lindlar (DE)**

(74) Vertreter: **Manitz, Finsterwald & Partner GbR**
 **Postfach 31 02 20**
 **80102 München (DE)**

(54) **Verfahren zum Kalibrieren eines Beschleunigungssensors**

(57)    Bei einem Verfahren zum Kalibrieren eines insbesondere als Neigungssensor einsetzbaren Beschleunigungssensors werden ein jeweiliger zu kalibrierender Beschleunigungssensor an einer in Drehung versetzbaren Rotationseinrichtung, insbesondere Scheibe, in definiertem Abstand zur Rotationsachse fest montiert und die Rotationseinrichtung bzw. Scheibe anschließend mit definierter Winkelgeschwindigkeit in Drehung versetzt, um eine auf den Sensor wirkende definierte Beschleunigung zu erzeugen.

# FIG. 1

EP 1 701 135 A1

**Beschreibung**

Die Erfindung betrifft ein Verfahren zum Kalibrieren eines insbesondere als Neigungssensors einsetzbaren Beschleunigungssensors. Derartige Beschleunigungssensoren finden beispielsweise in Fahrzeugen Verwendung.

Zum Kalibrieren von Beschleunigungssensoren, die als Neigungssensoren eingesetzt werden, wurden die Sensoren bisher in zwei Positionen unterschiedlicher Neigung gebracht. Anhand der aufgenommenen Messdaten ergeben sich der Offset und die Sensitivität.

Nachteilig an dem bisherigen Verfahren ist insbesondere die relativ lange Kalibrierzeit.

Der Erfindung liegt die Aufgabe zugrunde, ein verbessertes Verfahren der eingangs genannten Art bereitzustellen, mit dem die jeweilige Kalibrierzeit möglichst kurz gehalten wird und das insgesamt relativ kostengünstig ist.

Diese Aufgabe wird erfindungsgemäß dadurch gelöst, dass ein jeweiliger zu kalibrierender Beschleunigungssensor an einer in Drehung versetzbaren Rotationseinrichtung, insbesondere Scheibe, in definiertem Abstand zur Rotationsachse fest montiert wird und dass die Rotationseinrichtung bzw. Scheibe anschließend mit definierter Winkelgeschwindigkeit in Drehung versetzt wird, um eine auf den Sensor wirkende definierte Beschleunigung zu erzeugen.

Durch Rotation des jeweiligen Beschleunigungssensors wird also eine definierte, auf den Sensor wirkende Beschleunigung erzeugt, was unter anderem den Vorteil einer kürzeren Kalibrierzeit mit sich bringt. Zudem sind beispielsweise konstant rotierende Scheiben relativ preiswert herstellbar.

Bevorzugt wird die Winkelgeschwindigkeit während des Kalibriervorgangs abgesehen vom Anlauf und dem Abbremsen am Ende der Bewegung zumindest im Wesentlichen konstant gehalten.

Der Beschleunigungssensor kann mit Energie versorgt und in einen Kalibriermodus versetzt werden, in dem er Messdaten aufnimmt und diese Messdaten speichert und/oder an ein mit ihm verbundenes Auswertesystem übermittelt.

Dabei wird der Beschleunigungssensor vorteilhafterweise in den Kalibriermodus versetzt, bevor die Rotationseinrichtung bzw. Scheibe mit definierter Winkelgeschwindigkeit gedreht wird.

Zweckmäßigerweise wird bei der Auswertung der aufgenommenen Messdaten die Orientierung der zu kalibrierenden Achse des Beschleunigungssensors relativ zur Drehrichtung berücksichtigt. Es wird also dem Umstand Rechnung getragen, dass je nach Orientierung der zu kalibrierenden Sensorachse relativ zur Drehrichtung von der radial nach außen gerichteten Beschleunigung evtl. nur ein Teil auf die Sensorachse wirkt.

Zum Kalibrieren lediglich einer Sensorachse wird der Beschleunigungssensor vorzugsweise so an der Rotationseinrichtung bzw. Scheibe montiert, dass die Sensorachse radial ausgerichtet ist. Damit ist eine maximale Wirkung der Zentripedalbeschleunigung sichergestellt.

Zum Kalibrieren eines zweiachsigen Beschleunigungssensors wird der Beschleunigungssensor vorteilhafterweise so an der Rotationseinrichtung bzw. Scheibe montiert, dass die beiden senkrecht zueinander angeordneten Sensorachsen jeweils in einem Winkel von 45° zum durch die Rotationsachse und die Sensorposition auf der Rotationseinrichtung bzw. Scheibe bestimmten radialen Vektor angeordnet sind.

Im Fall eines solchen zweiachsigen Beschleunigungssensors können die beiden Sensorachsen also insbesondere zeitgleich kalibriert werden.

Gemäß einer bevorzugten praktischen Ausgestaltung des erfindungsgemäßen Verfahrens wird die Rotationseinrichtung bzw. Scheibe für einen jeweiligen Kalibriervorgang jeweils um einen vorgegebenen Drehwinkel, von z.B. 180°, gedreht.

Gemäß einer weiteren vorteilhaften Ausgestaltung des erfindungsgemäßen Verfahrens wird die Rotationseinrichtung bzw. Scheibe nach einer ersten, der Kalibrierung dienenden Drehung um einen vorgegebenen ersten Drehwinkel, von z.B. 180°, um einen vorgegebenen zweiten Drehwinkel, von z.B. 180°, in die gleiche Richtung weiter gedreht.

Alternativ kann die Rotationseinrichtung bzw. Scheibe nach einer ersten, der Kalibrierung dienenden Drehung um einen vorgegebenen ersten Drehwinkel, von z.B. 180°, um einen vorgegebenen zweiten Drehwinkel, von z.B. 180°, in die entgegengesetzte Richtung zurück gedreht werden. Die Drehung der Rotationseinrichtung bzw. Scheibe erfolgt mit anderen Worten abwechselnd im bzw. gegen den Uhrzeigersinn. Durch diese zyklische Änderung der Drehrichtung wird, insbesondere wenn der erste und zweite Drehwinkel gleich groß sind, die Verdrillung einer elektrischen Leitung verhindert, welche beispielsweise zur Versorgung des Beschleunigungssensors mit elektrischer Spannung und/oder zum Auslesen von Messsignalen des Beschleunigungssensors vorgesehen ist.

Dabei kann die Drehung der Rotationseinrichtung bzw. Scheibe um den vorgegebenen zweiten Drehwinkel beispielsweise zur Verifikation der zuvor erfolgten Kalibrierung genutzt werden. Der während der Drehung um den vorgegebenen ersten Drehwinkel kalibrierte Beschleunigungssensor kann während der Drehung um den vorgegebenen zweiten Drehwinkel also die Drehbeschleunigung messen.

Alternativ kann die Drehung der Rotationseinrichtung bzw. Scheibe um den vorgegebenen zweiten Drehwinkel auch zur Aufnahme weiterer Messdaten für die Kalibrierung genutzt werden. Für einen jeweiligen Kalibriervorgang wird die Rotationseinrichtung bzw. Scheibe in diesem Fall also um beispielsweise 360° gedreht. Das heißt die entsprechende Auswertung erfolgt erst nach einer Drehung um 360°. Der Vorteil einer solchen Vorgehensweise besteht darin, dass eine evtl. Schieflage der Rotationseinrichtung bzw. Scheibe einen damit verbundenen Offset kompensiert.

Es ist insbesondere auch möglich, zwei oder mehrere zu kalibrierende Beschleunigungssensoren an einer jeweiligen Rotationseinrichtung bzw. Scheibe zu montieren.

Dabei kann die Rotationseinrichtung bzw. Scheibe beispielsweise mit einem ersten daran montierten Beschleunigungssensor zunächst um 180° gedreht, dann ein weiterer Beschleunigungssensor an der Rotationseinrichtung bzw. Scheibe montiert und anschließend die Rotationseinrichtung bzw. Scheibe um weitere 180° gedreht werden. Dabei kann der weitere Beschleunigungssensor insbesondere an einer Stelle der Rotationseinrichtung bzw. Scheibe montiert werden, die gegenüber der Position des ersten Beschleunigungssensors um 180° versetzt ist.

Zur Erhöhung der Anzahl der zu kalibrierenden Beschleunigungssensoren können auch mehrere Rotationseinrichtungen bzw. Scheiben übereinander angeordnet werden. Dabei werden die Rotationseinrichtungen bzw. Scheiben vorzugsweise synchron angetrieben.

Die Erfindung wird im Folgenden anhand von Ausführungsbeispielen unter Bezugnahme auf die Zeichnung näher erläutert; in dieser zeigen:

Fig. 1    eine schematische Draufsicht einer zum Kalibrieren eines Beschleunigungssensors dienenden, in Drehung versetzbaren Scheibe,

Fig. 2    eine schematische Seitenansicht einer zum Kalibrieren eines Beschleunigungssensors dienenden, relativ zur Horizontalen geneigten Scheibe,

Fig. 3    ein Vektordiagramm, das eine beispielhafte Ausrichtung der Sensorachsen eines zweiachsigen Beschleunigungssensors relativ zum radialen Vektor zeigt, und

Fig. 4    ein Vektordiagramm, das eine beispielhafte radiale Ausrichtung der Achse eines einachsigen Beschleunigungssensors wiedergibt.

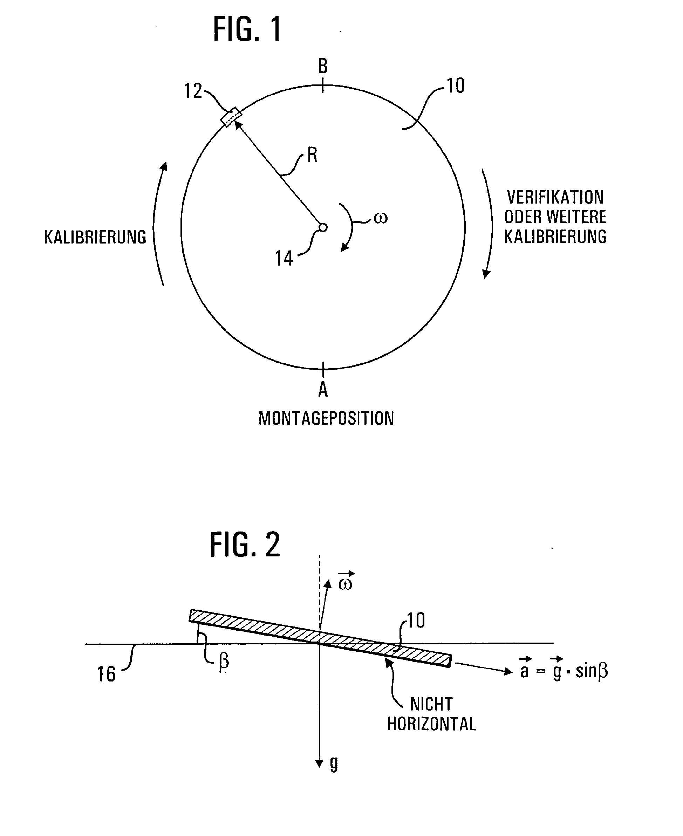

Fig. 1 zeigt in schematischer Draufsicht eine als in Drehung versetzbare Rotationseinrichtung dienende Scheibe 10, die zum Kalibrieren eines insbesondere als Neigungssensor einsetzbaren Beschleunigungssensors 12 verwendet wird.

Dabei wird der zu kalibrierende Beschleunigungssensor 12 auf der in Drehung versetzbaren Scheibe 10 in definiertem Abstand R zur Rotationsachse 14 fest montiert. Nachdem der Beschleunigungssensor 12 im vorliegenden Fall im Bereich des äußeren Randes der Scheibe 10 angeordnet ist, entspricht der definierte Abstand R des Beschleunigungssensors 12 zur Rotationsachse 14 dem Radius der Scheibe 10.

Anschließend wird die Scheibe 10 mit definierter Winkelgeschwindigkeit $\omega$ in Drehung versetzt, um eine auf den Sensor 12 wirkende definierte Beschleunigung zu erzeugen. Dabei ist die Winkelgeschwindigkeit $\omega$ abgesehen vom Anlauf und dem Abbremsen am Ende der Bewegung zumindest im Wesentlichen konstant.

Der Beschleunigungssensor 12 wird mit Energie bzw. Spannung versorgt und in einen Kalibriermodus versetzt, in dem er Messdaten aufnimmt und diese Messdaten speichert und/oder an ein mit ihm verbundenes Auswertesystem übermittelt. Dabei kann der Beschleunigungssensor 12 in den Kalibriermodus versetzt werden, bevor die Scheibe 10 mit definierter Winkelgeschwindigkeit $\omega$ gedreht wird.

Der Beschleunigungssensor 12 wird anfänglich in einer Position A auf der Scheibe 10 montiert und anschließend für einen jeweiligen Kalibriervorgang beispielsweise um 180° bis zur Position B gedreht. In der Darstellung gemäß Fig. 1 wurde die Scheibe 10 bereits in Drehung versetzt, so dass der Beschleunigungssensor 12 bereits eine von der Position A abweichende Position, im vorliegenden Fall eine Position zwischen A und B, einnimmt.

Durch die konstante Rotation mit der Winkelgeschwindigkeit $\omega$ wirkt auf den Beschleunigungssensor 12 in Radialrichtung eine Beschleunigung a = $\omega^2 \cdot$ R, wobei R dem Abstand des Beschleunigungssensors 12 zur Rotationsachse 14 und im vorliegenden Fall dem Radius der Scheibe 10 entspricht.

Je nach Orientierung der zu kalibrierenden Achse des Beschleunigungssensors relativ zur Drehrichtung wirkt von der radial nach außen gerichteten Beschleunigung gegebenenfalls nur ein Teil auf die Sensorachse. Zweckmäßigerweise wird daher die jeweilige Orientierung der zu kalibrierenden Achse des Beschleunigungssensors 12 relativ zur Drehrichtung bei der Auswertung der aufgenommenen Messdaten entsprechend berücksichtigt.

Während der ersten der Kalibrierung dienenden Drehung der Scheibe 10 um 180° wird der zu kalibrierende Beschleunigungssensor 12 von der Position A zur Position B bewegt. Nach dieser ersten, der Kalibrierung dienenden Drehung um 180° kann die Scheibe 10 beispielsweise um weitere 180° gedreht werden, so dass der Beschleunigungssensor 12 von der Position B wieder zur Position A zurückkehrt.

Dabei kann die Drehung der Scheibe 10 um die weiteren 180° beispielsweise zur Verifikation der zuvor erfolgten Kalibrierung genutzt werden. Hierbei kann der bereits kalibrierte Beschleunigungssensor 12 dann die Drehbeschleunigung messen.

Alternativ kann die Drehung der Scheibe 10 um die weiteren 180° beispielsweise jedoch auch zur Aufnahme weiterer Messdaten für die Kalibrierung genutzt werden. Eine Auswertung erfolgt hier also erst nach einer Drehung um 360°.

Eine solche Vorgehensweise bringt unter anderem den Vorteil mit sich, dass bei einer Schieflage der Scheibe 10 relativ zur Horizontalen 16 (vgl.
Fig. 2) ein damit verbundener Offset kompensiert würde.

Gemäß der Fig. 2 ist die Scheibe 10 um den Winkel $\alpha$ gegenüber der Horizontalen 16 geneigt. Wie in der Fig.

2 angedeutet, ergibt sich somit ein Offset von $\vec{a} = \vec{g} \cdot \sin \beta$, wobei mit g die Erdbeschleunigung angegeben ist.

Anstatt die Scheibe 10 zur Verifikation der zuvor erfolgten Kalibrierung und/oder Aufnahme weiterer Messdaten für die Kalibrierung ein weiteres Mal in die gleiche Richtung zu drehen, ist es auch möglich, die weitere Drehung der Scheibe 10 in die entgegengesetzte Richtung vorzunehmen, d.h. die Drehrichtung zu ändern. Die Scheibe 10 wird mit anderen Worten zur Kalibrierung zunächst um 180° in eine Richtung gedreht und anschließend zur Verifikation oder Aufnahme weiterer Messdaten wieder um 180° zurück gedreht.

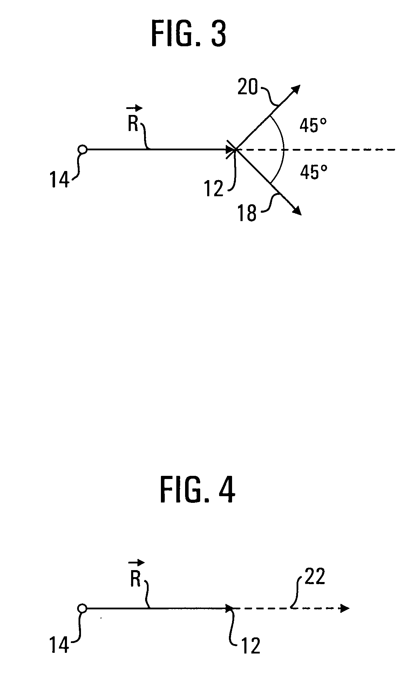

Wie in der Fig. 3 gezeigt, kann zum Kalibrieren eines zweiachsigen Beschleunigungssensors 12 der Beschleunigungssensor 12 so an der Scheibe 10 montiert sein, dass die beiden senkrecht zueinander angeordneten Sensorachsen 18, 20 jeweils in einem Winkel von 45° zum durch die Rotationsachse 14 und die Sensorposition auf der Scheibe 10 bestimmten radialen Vektor $\vec{R}$ wie in Fig. 3 angeordnet sein.

Die auf eine jeweilige Achse wirkende Beschleunigung ergibt sich also durch die folgende Beziehung:

$$\vec{a} = \omega^2 \cdot \vec{R} \cdot \cos 45° = \omega^2 \cdot \vec{R} / \sqrt{2}$$

Im Fall eines solchen zweiachsigen Beschleunigungssensors 12 können die beiden Sensorachsen 18, 20 zeitgleich kalibriert werden.

Wie in Fig. 4 gezeigt, kann zum Kalibrieren lediglich einer Sensorachse 22 der Beschleunigungssensor 12 so an der Scheibe 10 (vgl. auch Fig. 1) montiert sein, dass die Sensorachse 22 radial ausgerichtet ist, d.h. die gleiche Richtung wie der radiale Vektor R besitzt. Auf den Beschleunigungssensor 12 wirkt im vorliegenden Fall also die radial nach außen gerichtete Beschleunigung $\vec{a} = \omega^2 \cdot \vec{R}$. Es ist also sichergestellt, dass die Zentripedalbeschleunigung maximal wirkt.

Wie bereits erwähnt, können grundsätzlich auch zwei oder mehrere zu kalibrierende Beschleunigungssensoren 12 an der Scheibe 10 montiert werden. Es ist also insbesondere auch eine Kalibrierung von mehreren Sensoren pro Scheibe denkbar.

Wann immer ein Beschleunigungssensor 12 an der Position P (vgl. Fig. 1) angekommen ist, kann an der Position A ein weiterer Beschleunigungssensor 12 auf der Scheibe 10 aufgebracht werden.

Grundsätzlich ist es auch möglich, mehrere Scheiben 10 übereinander zu montieren, um die Zahl der zu kalibrierenden Systeme weiter zu erhöhen. Dabei ergibt sich insbesondere auch eine weitere Optimierung der Kalibrationszeit.

Wie sich aus den folgenden Rechenbeispielen ergibt, muss bei einem Radius R von beispielsweise 0,5 m die Frequenz s etwa 0,5 Hz betragen, um eine Neigung von beispielsweise 30° zu simulieren. Hieraus folgt, dass der Beschleunigungssensor 12 für die Bewegung von A nach B (vgl. Fig. 1) etwa 1 s benötigt. Jeder Beschleunigungssensor 12 ist daher nach ungefähr 2 s (+ die Zeit für die Handhabung) kalibriert. Wie bereits erwähnt, können je Scheibe 10 auch mehrere Beschleunigungssensoren 12 kalibriert werden. Denkbar ist auch, mehrere Scheiben übereinander zu montieren, um die Zahl der zu kalibrierenden Systeme weiter zu erhöhen, wodurch die Kalibrationszeit weiter optimiert wird.

Bei dem erwähnten, im Folgenden wiedergegebenen Rechenbeispiel ist mit R der Radius der Scheibe 10, mit $\alpha$ die Neigung, mit $\omega$ die Winkelgeschwindigkeit, mit g die Erdbeschleunigung, mit f die Frequenz sowie mit T die Zeitdauer angegeben, nach der ein jeweiliger Beschleunigungssensor 12 kalibriert ist.

$$r = 0,3 \text{ m}$$

$$\alpha = 30° \;\rightarrow\; \sin\alpha = 0{,}5$$

$$\omega = \sqrt{\frac{g \cdot \sin\alpha}{R}} \approx 3{,}13\ \mathrm{rad}\cdot\mathrm{s}^{-1} = 2\cdot\pi\cdot f$$
$$\rightarrow f \approx 0{,}4984\ \mathrm{Hz} \rightarrow T \approx 2\ \mathrm{s}\ (A \rightarrow B \rightarrow A)$$

Obwohl das voranstehende Ausführungsbeispiel anhand von Drehwinkeln von 180° bzw. 360° beschrieben wurde, ist die Erfindung nicht auf diese Winkel beschränkt. So lässt sich die erfindungsgemäße Kalibrierung des Beschleunigungssensors 12 grundsätzlich auch bei einer weitergehenden oder geringeren Verdrehung der Scheibe 10 durchführen. Gegebenenfalls ist der Einfluss der Größe des Drehwinkels auf die Genauigkeit der Kalibrierung zu berücksichtigen.

Bezugszeichenliste

| | |
|---|---|
| 10 | Scheibe, Rotationseinrichtung |
| 12 | Beschleunigungssensor |
| 14 | Rotationsachse |
| 16 | Horizontale |
| 18 | Sensorachse |
| 20 | Sensorachse |
| 22 | Sensorachse |

| | |
|---|---|
| R | Abstand, Radius |
| R | radialer Vektor |
| $\omega$ | Winkelgeschwindigkeit |
| f | Frequenz |
| T | Zeitdauer |

**Patentansprüche**

1. Verfahren zum Kalibrieren eines insbesondere als Neigungssensor einsetzbaren Beschleunigungssensors (12), **dadurch gekennzeichnet ,** **dass** ein jeweiliger zu kalibrierender Beschleunigungssensor (12) an einer in Drehung versetzbaren Rotationseinrichtung, insbesondere Scheibe (10), in definiertem Abstand (R) zur Rotationsachse (14) fest montiert wird und dass die Rotationseinrichtung bzw. Scheibe (10) anschließend mit definierter Winkelgeschwindigkeit ($\omega$) in Drehung versetzt wird, um eine auf den Sensor wirkende definierte Beschleunigung zu erzeugen.

2. Verfahren nach Anspruch 1, **dadurch gekennzeichnet ,** **dass** die Winkelgeschwindigkeit ($\omega$) während des Kalibriervorgangs zumindest im Wesentlichen konstant gehalten wird.

3. Verfahren nach Anspruch 1 oder 2, **dadurch gekennzeichnet ,** **dass** der Beschleunigungssensor (12) mit Energie versorgt und in einen Kalibriermodus versetzt wird, in dem er Messdaten aufnimmt und diese Messdaten speichert und/oder an ein mit ihm verbundenes Auswertesystem übermittelt.

4. Verfahren nach Anspruch 3, **dadurch gekennzeichnet ,**

**dass** der Beschleunigungssensor (12) in den Kalibriermodus versetzt wird, bevor die Rotationseinrichtung bzw. Scheibe (10) mit definierter Winkelgeschwindigkeit gedreht wird.

5. Verfahren nach einem der vorhergehenden Ansprüche,
   **dadurch gekennzeichnet ,**
   **dass** bei der Auswertung der aufgenommenen Messdaten die Orientierung der zu kalibrierenden Achse des Beschleunigungssensors (12) relativ zur Drehrichtung berücksichtigt wird.

6. Verfahren nach einem der vorhergehenden Ansprüche,
   **dadurch gekennzeichnet ,**
   **dass** zum Kalibrieren lediglich einer Sensorachse (22) der Beschleunigungssensor (12) so an der Rotationseinrichtung bzw. Scheibe (10) montiert wird, dass die Sensorachse (22) radial ausgerichtet ist.

7. Verfahren nach einem der vorhergehenden Ansprüche,
   **dadurch gekennzeichnet ,**
   **dass** zum Kalibrieren eines zweiachsigen Beschleunigungssensors (12) der Beschleunigungssensor (12) so an der Rotationseinrichtung bzw. Scheibe (10) montiert wird, dass die beiden senkrecht zueinander angeordneten Sensorachsen (18, 20) jeweils in einem Winkel von 45° zum durch die Rotationsachse (14) und die Sensorposition auf der Rotationseinrichtung bzw. Scheibe (10) bestimmten radialen Vektor $(\vec{R})$ angeordnet sind.

8. Verfahren nach einem der vorhergehenden Ansprüche,
   **dadurch gekennzeichnet ,**
   **dass** im Fall eines zweiachsigen Beschleunigungssensors (12) die beiden Sensorachsen (18, 20) zeitgleich kalibriert werden.

9. Verfahren nach einem der vorhergehenden Ansprüche,
   **dadurch gekennzeichnet ,**
   **dass** die Rotationseinrichtung bzw. Scheibe (10) für einen jeweiligen Kalibriervorgang jeweils um einen vorgegebenen Drehwinkel, von z.B. 180°, gedreht wird.

10. Verfahren nach einem der vorhergehenden Ansprüche,
    **dadurch gekennzeichnet ,**
    **dass** die Rotationseinrichtung bzw. Scheibe (10) nach einer ersten, der Kalibrierung dienenden Drehung um einen vorgegebenen ersten Drehwinkel, von z.B. 180°, um einen vorgegebenen zweiten Drehwinkel, von z.B. 180°, in die gleiche Richtung weiter gedreht wird.

11. Verfahren nach einem der Ansprüche 1 bis 9,
    **dadurch gekennzeichnet ,**
    **dass** die Rotationseinrichtung bzw. Scheibe (10) nach einer ersten, der Kalibrierung dienenden Drehung um einen vorgegebenen ersten Drehwinkel, von z.B. 180°, um einen vorgegebenen zweiten Drehwinkel, von z.B. 180°, in die entgegengesetzte Richtung zurück gedreht wird.

12. Verfahren nach Anspruch 10 oder 11,
    **dadurch gekennzeichnet ,**
    **dass** die Drehung der Rotationseinrichtung bzw. Scheibe (10) um den vorgegebenen zweiten Drehwinkel zur Verifikation der zuvor erfolgten Kalibrierung genutzt wird.

13. Verfahren nach Anspruch 10 oder 11,
    **dadurch gekennzeichnet ,**
    **dass** die Drehung der Rotationseinrichtung bzw. Scheibe (10) um den vorgegebenen zweiten Drehwinkel zur Aufnahme weiterer Messdaten für die Kalibrierung genutzt wird.

14. Verfahren nach einem der vorhergehenden Ansprüche,
    **dadurch gekennzeichnet ,**
    **dass** wenigstens zwei zu kalibrierende Beschleunigungssensoren (12) an der Rotationseinrichtung bzw. Scheibe (10) montiert werden.

**15.** Verfahren nach Anspruch 14,
**dadurch gekennzeichnet ,**
**dass** die Rotationseinrichtung bzw. Scheibe (10) mit einem ersten daran montierten Beschleunigungssensor (12) zunächst um 180° gedreht, dann ein weiterer Beschleunigungssensor (12) an der Rotationseinrichtung bzw. Scheibe (10) montiert und anschließend die Rotationseinrichtung bzw. Scheibe (10) um weitere 180° gedreht wird.

**16.** Verfahren nach Anspruch 15,
**dadurch gekennzeichnet ,**
**dass** der weitere Beschleunigungssensor (12) an einer Stelle der Rotationseinrichtung bzw. Scheibe (10) montiert wird, die gegenüber der Position des ersten Beschleunigungssensors (12) um 180° versetzt ist.

**17.** Verfahren nach einem der vorhergehenden Ansprüche,
**dadurch gekennzeichnet ,**
**dass** zur Erhöhung der Anzahl der zu kalibrierenden Beschleunigungssensoren (12) mehrere Rotationseinrichtungen bzw. Scheiben (10) übereinander angeordnet werden.

**18.** Verfahren nach Anspruch 17,
**dadurch gekennzeichnet ,**
**dass** die Rotationseinrichtungen bzw. Scheiben (10) synchron angetrieben werden.

# FIG. 1

KALIBRIERUNG

VERIFIKATION
ODER WEITERE
KALIBRIERUNG

MONTAGEPOSITION

# FIG. 2

$$\vec{a} = \vec{g} \cdot \sin\beta$$

NICHT HORIZONTAL

## FIG. 3

## FIG. 4

**Europäisches Patentamt** **EUROPÄISCHER RECHERCHENBERICHT**

Nummer der Anmeldung

EP 05 00 5371

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 823 279 B1 (NADKARNI VIVEK B ET AL) 23. November 2004 (2004-11-23) * Spalte 2, Zeile 50 - Spalte 3, Zeile 17 * * Spalte 5, Zeile 11 - Spalte 6, Zeile 54; Abbildungen 1A-1E * ----- | 1-18 | G01C25/00 G01P21/00 |
| X | US 4 188 816 A (MAIRSON, THEODORE) 19. Februar 1980 (1980-02-19) * Spalte 12, Zeile 28 - Spalte 14, Zeile 22; Abbildungen 3A,3B * ----- | 1-6,9-18 | |
| X | US 2 788 654 A (WIANCKO THOMAS H ET AL) 16. April 1957 (1957-04-16) * Spalte 1, Zeile 10 - Spalte 7, Zeile 35; Abbildungen 1,2 * ----- | 1-3,5,6, 9-18 | |
| X | DATABASE WPI Section EI, Week 199334 Derwent Publications Ltd., London, GB; Class S02, AN 1993-271104 XP002340777 & SU 1 756 826 A1 (PHYS MEASUREMENTS RES INST) 23. August 1992 (1992-08-23) * Zusammenfassung * -& SU 1 756 826 A1 (NII FIZICHESKIKH IZMERENIJ) 23. August 1992 (1992-08-23) * Abbildung 1 * ----- | 1,5,9-18 | **RECHERCHIERTE SACHGEBIETE (Int.Cl.7)** G01C G01P |
| A | WO 00/37891 A (AUTOFLUG GMBH & CO; DRUECKE, PETER; HINSCH, THOMAS) 29. Juni 2000 (2000-06-29) * Seite 3, Absatz 2 - Seite 10, letzter Absatz * ----- | 1-18 | |

Der vorliegende Recherchenbericht wurde für alle Patentansprüche erstellt

| Recherchenort | Abschlußdatum der Recherche | Prüfer |
|---|---|---|
| München | 16. August 2005 | Springer, O |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes
Dokument

EPO FORM 1503 03.82 (P04C03)

EP 1 701 135 A1

**ANHANG ZUM EUROPÄISCHEN RECHERCHENBERICHT**
**ÜBER DIE EUROPÄISCHE PATENTANMELDUNG NR.**

EP 05 00 5371

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-08-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 6823279 | B1 | 23-11-2004 | KEINE | | |
| US 4188816 | A | 19-02-1980 | CA | 1061132 A1 | 28-08-1979 |
| | | | CA | 1061133 A2 | 28-08-1979 |
| | | | DE | 2537786 A1 | 12-08-1976 |
| | | | DE | 2560292 C1 | 20-06-1985 |
| | | | FR | 2312783 A1 | 24-12-1976 |
| | | | FR | 2312782 A1 | 24-12-1976 |
| | | | GB | 1530993 A | 01-11-1978 |
| | | | GB | 1531503 A | 08-11-1978 |
| | | | IL | 48173 A | 12-03-1979 |
| | | | IT | 1047640 B | 20-10-1980 |
| | | | JP | 1407933 C | 27-10-1987 |
| | | | JP | 51075491 A | 30-06-1976 |
| | | | JP | 62004666 B | 31-01-1987 |
| US 2788654 | A | 16-04-1957 | KEINE | | |
| SU 1756826 | A1 | 23-08-1992 | KEINE | | |
| WO 0037891 | A | 29-06-2000 | DE | 19858621 A1 | 06-07-2000 |
| | | | WO | 0037891 A1 | 29-06-2000 |
| | | | DE | 59911618 D1 | 17-03-2005 |
| | | | EP | 1144955 A1 | 17-10-2001 |
| | | | US | 6738721 B1 | 18-05-2004 |

EPO FORM P0461

Für nähere Einzelheiten zu diesem Anhang : siehe Amtsblatt des Europäischen Patentamts, Nr.12/82